# EUROPÄISCHE PATENTSCHRIFT

(11) **EP 2 681 473 B1**
(45) Veröffentlichungstag und Bekanntmachung des Hinweises auf die Patenterteilung: **27.09.2017**
(21) Anmeldenummer: 12708520.7
(22) Anmeldetag: 28.02.2012
(51) Int. Cl.: F16K 15/02, F16K 1/30, F16K 17/18

(54) **RESTDRUCKVENTIL**
RESIDUAL PRESSURE VALVE
SOUPAPE DE PRESSION RÉSIDUELLE

(30) Priorität: 28.02.2011 DE 202011003322 U
(43) Veröffentlichungstag der Anmeldung: 08.01.2014
(73) Patentinhaber: Alligator Ventilfabrik GmbH, 89537 Giengen (DE)
(72) Erfinder: PALAORO, Renato, 89518 Heidenheim (DE)
(74) Vertreter: Vötsch, Reiner
(86) Internationale Anmeldenummer: PCT/EP2012/053299
(87) Internationale Veröffentlichungsnummer: WO 2012/116964

(56) Entgegenhaltungen:
- EP-B1- 0 987 475
- DE-A1- 10 045 122
- US-A- 4 072 165
- US-A1- 2011 220 215

## Beschreibung

Die Erfindung betrifft ein Restdruckventil nach dem Oberbegriff des Anspruchs 1.

Ein derartiges Restdruckventil ist aus der EP 0 987 475 B1 der Anmelderin oder aus der US 4,072,165 A1 bekannt.

Das bekannte, in unterschiedliche Strömungsrichtungen durchströmbare Restdruckventil dient dabei zum Halten eines bestimmten Restdruckes innerhalb eines druckluftbeaufschlagten Federbeins in einem Kraftfahrzeug. Das aus der genannten Schrift bekannte Restdruckventil hat sich dabei in der Praxis als zuverlässiges Ventil herausgestellt, das den gestellten Anforderungen gerecht wird. Es ist jedoch insbesondere durch das Vorsehen von mehreren, in Längsrichtung des Ventilgehäuses in einem der Ventilgehäusebauteile ausgebildeten Längsbohrungen, die Teil eines Strömungsdurchgangs für das Strömungsmedium sind, relativ aufwendig ausgebildet.

Aufgabe der Erfindung ist es daher, ein Restdruckventil nach dem Oberbegriff des Anspruchs 1 derart weiterzubilden, dass dieses unter fertigungstechnischen Gesichtspunkten besonders einfach und genau herstellbar ist. Diese Aufgabe wird mit einem Restdruckventil mit den Merkmalen des Anspruchs 1 gelöst. Der Erfindung liegt dabei die Idee zugrunde, insbesondere die beim Stand der Technik vorhandenen Längsbohrungen, die durch separate, spanende Fertigungsschritte hergestellt sind, durch einen Ringraum zu ersetzen, der sich beim Zusammenfügen der beiden Ventilgehäuseteile durch die Geometrie der Ventilgehäuseteile automatisch ausbildet und somit keinerlei separater Bearbeitung bzw. Herstellung bedarf.

Vorteilhafte Weiterbildungen des erfindungsgemäßen Restdruckventils sind in den Unteransprüchen angegeben. In den Rahmen der Erfindung fallen sämtliche Kombinationen aus zumindest zwei von in den Ansprüchen, der Beschreibung und/oder den Figuren offenbarten Merkmalen.

Eine besonders einfache und genaue Herstellbarkeit des Gegenelements, das mit dem Dichtelement zusammenwirkt, um beim Unterschreiten eines bestimmten Mindestdrucks den Strömungsweg für das Strömungsmedium zu sperren, wird erzielt, wenn das Gegenelement durch einen radial zur Längsachse des Ventilgehäuses umlaufenden Wandabschnitt des ersten Ventilgehäuseteils gebildet ist.

In einer ersten konstruktiven Ausgestaltung des Dichtelements ist es dabei vorgesehen, dass dieses auf der dem Wandabschnitt zugewandten Seite in einer Ausnehmung einen O-Ring aufweist, der zum Sperren des Strömungswegs an dem Wandabschnitt anliegt. Da es sich bei dem O-Ring um ein Normteil handelt werden dadurch der Fertigungsaufwand bzw. die Fertigungskosten nur relativ gering erhöht und es kann darüber hinaus besonders einfach im Versagensfall ausgetauscht werden.

Alternativ zu einem O-Ring ist es jedoch auch möglich, dass das Dichtelement auf der dem Wandabschnitt zugewandten Seite eine aus elastischem Material bestehende, ringförmige oder zylindrische Dichtung aufweist, die mit einer Stirnfläche zum Sperren des Strömungsweges an einer Dichtkante des Wandabschnitts anliegt. Insbesondere durch die Ausbildung der Dichtkante am Wandabschnitt wird dabei eine besonders hohe Dichtwirkung durch eine relativ hohe Flächenpressung zwischen der Dichtkante und dem Dichtelement bzw. der Dichtung erzielt.

Zum Verbinden der beiden Ventilgehäuseteile wird in einer ersten konstruktiven Ausbildung vorgeschlagen, dass diese durch eine Schraubverbindung miteinander verbunden sind. Dadurch wird insbesondere eine besonders einfache Montage ermöglicht und darüber hinaus ist ein Auseinanderbau des Ventilgehäuses bzw. ein wieder Trennen der beiden Ventilgehäuseteile mit einfachem Werkzeug möglich.

Um beim Vorsehen einer Schraubverbindung zwischen den beiden Ventilgehäuseteilen eine zuverlässige und sichere Abdichtung des Ventilgehäuses nach außen hin zu ermöglichen, bei der gleichzeitig keinerlei Feuchtigkeit oder ähnliches in das Ventilgehäuse eindringen kann, wird darüber hinaus vorgeschlagen, dass wenigstens eines der beiden Ventilgehäuseteile optional einen radial umlaufenden Flanschbereich aufweist, der beim Verbinden der beiden Ventilgehäuseteile mittels der Schraubverbindung als Axialanschlag wirkt, und dass in dem wenigstens einen Flanschbereich eine ringförmige Ausnehmung zur Aufnahme einer als O-Ring ausgebildeten Dichtung ausgebildet ist. Weiterhin wirkt der flanschförmige Bereich zur Montagevereinfachung.

In einer alternaiven Ausbildung zur Herstellung der Verbindung der beiden Ventilgehäuseteile wird vorgeschlagen, dass diese durch eine Laserschweißverbindung miteinander verbunden sind. Eine derartige Verbindung hat den besonderen Vorteil, dass gegenüber einer Schraubverbindung auf ein zusätzliches Dichtelement (z.B. in Form eines O-Ring) verzichtet werden kann.

Um beim Zusammenfügen der beiden Ventilgehäuseteile die axiale Position der beiden Ventilgehäuseteile zueinander ohne zusätzliche Hilfs- bzw. Montagehilfsmittel zu ermöglichen wird darüber hinaus in einer konstruktiv vorteilhaften Ausgestaltung vorgeschlagen, dass eines der Ventilgehäuseteile einen flanschförmig umlaufenden Bund aufweist, gegen den beim Fügen der beiden Ventilgehäuseteile das andere Ventilgehäuseteil mit einer Stirnfläche anliegt.

Dieser Anlagebereich kann in fertigungstechnisch bevorzugter Art und Weise gleichzeitig der Bereich sein, in dem die Laserschweißverbindung die beiden Ventilgehäuseteile miteinander verbindet.

Um zu verhindern, dass Leckageluft über die Führung des Dichtelements an die Umgebung abgegeben wird, wird darüber hinaus in einer weiteren bevorzugten Ausgestaltung der Erfindung vorgeschlagen, dass das Dichtelement kolbenartig ausgebildet ist, und dass das Dichtelement im Bereich der Aufnahme im ersten Ventilgehäuseteil an einer Umfangsfläche eine Ringnut aufweist, in der ein Dichtelement, insbesondere in Form eines O-Rings angeordnet ist, das an der Aufnahme anliegt.

Besonders bevorzugt ist dabei eine Ausgestaltung, bei der ein Kraftspeicher in einem Kraftspeicherraum angeordnet ist, der mittels wenigstens einer Entlüftungsbohrung mit der Umgebung verbunden ist. Dadurch wird insbesondere vermieden, dass die durch den Kraftspeicher einstellbare Gegenkraft, über die der Mindestdruck in dem Druckspeicher eingestellt wird, durch in den Aufnahmeraum für den Kraftspeicher einströmende Luft bzw. einströmendes Strömungsmedium verfälscht wird.

Weitere Vorteile, Merkmale und Einzelheiten der Erfindung ergeben sich aus der nachfolgenden Beschreibung besonders bevorzugter Ausführungsbeispiele sowie anhand der Zeichnung.

Diese zeigt in:
- Fig. 1: einen Teillängsschnitt durch den oberen Teil eines druckluftbeaufschlagten sowie ein Restdruckventil enthaltenden Federbeins in einem Kraftfahrzeug,
- Fig. 2 und Fig. 3: ein erstes Ausführungsbeispiel des erfindungsgemäßen Restdruckventils in unterschiedlichen Winkellagen in jeweils teilweise geschnittener Seitenansicht,
- Fig.: 4 ein zweites, gegenüber den Fig. 2 und 3 abgewandeltes Restdruckventil in einer teilweise geschnittenen Seitenansicht und
- Fig.: 5 ein drittes, gegenüber den Fig. 2 bis 4 abgewandeltes Restdruckventil in teilweise geschnittener Seitenansicht.

Gleiche Bauteile bzw. Bauteile mit gleicher Funktion sind in den Figuren mit den gleichen Bezugsziffern versehen.

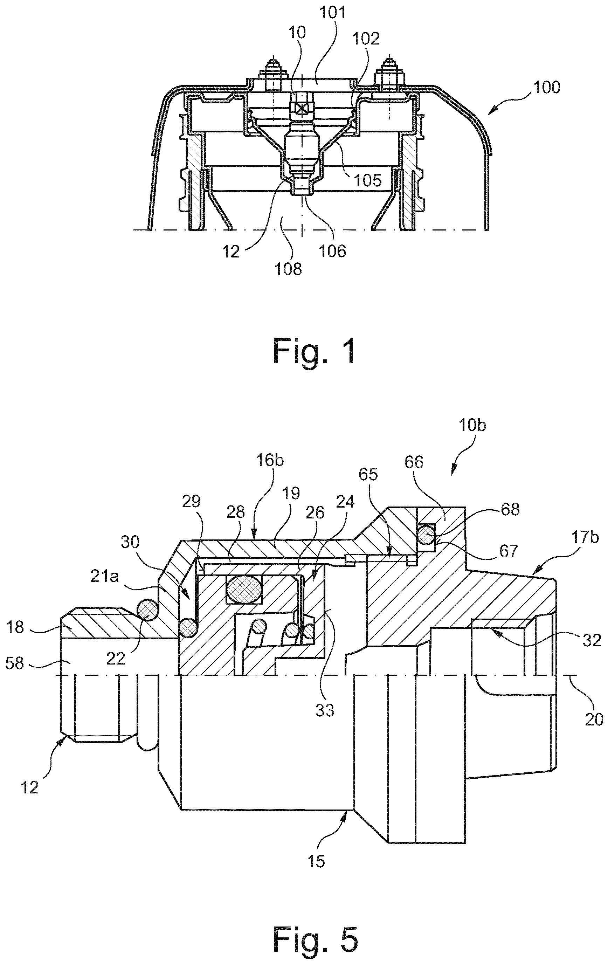

In einem in der Fig. 1 nur mit seinem oberen Bereich wiedergegebenen druckluftbeaufschlagten Federbein 100 für ein Kraftfahrzeug ist an einer Firstöffnung 101 im Bereich 102 eine trichterartige Halterung 105 für ein Restdruckventil 10 (das auch als Restdruckhalteventil bezeichnet wird) festgelegt. Das Restdruckventil 10 ist mit einem Schraubenhals 12 in einer schachtartigen Öffnung 106 in der Halterung 105 angeordnet. Mit dem Restdruckventil 10 soll in einem Kopfraum 108 des Federbeins 100 ein insbesondere bestimmter minimaler Restdruck gewährleistet werden. Wird dieser minimale Restdruck, beispielsweise ein Druck von 4 bar, erreicht, so schließt das Restdruckventil 10 und dichtet somit den Kopfraum 108 ab.

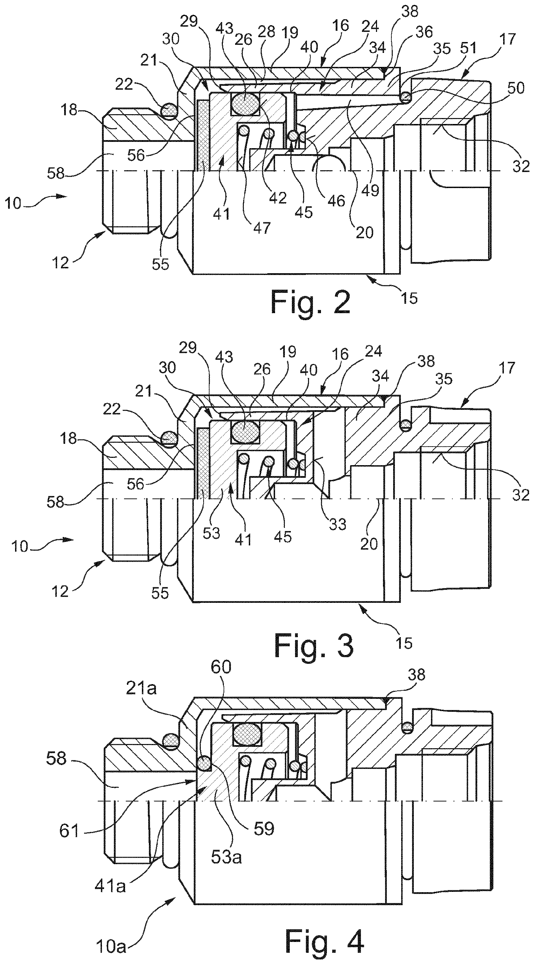

In den Fig. 2 und 3 ist das Restdruckventil 10 bei einer ersten Ausführungsform der Erfindung näher dargestellt. Das Restdruckventil 10 weist ein Ventilgehäuse 15 auf, das aus zwei miteinander verbundenen Ventilgehäuseteilen 16, 17 besteht. Das erste Ventilgehäuseteil 16, an dem auch der Schraubenhals 12 ausgebildet ist, ist im Wesentlichen hülsenförmig ausgebildet, und weist einen Bereich 18 mit dem Schraubenhals 12 auf, der gegenüber einem Bereich 19 des Ventilgehäuseteils 16 einen geringeren Durchmesser aufweist. Die beiden Bereiche 18, 19 sind mittels eines im Wesentlichen senkrecht zur Längsachse 20 des Restdruckventils 10 angeordneten, ringförmigen Wandabschnitts 21 miteinander verbunden. An dem dem Kopfraum 108 abgewandten Ende des Schraubenhalses 12 ist ferner im Übergangsbereich zwischen den beiden Bereichen 18, 19 in einer Ringnut ein Dichtring 22 aufgenommen, der das in der Öffnung 106 eingeschraubte Restdruckventil 10 zur Umgebung hin abdichtet.

Das zweite Ventilgehäuseteil 17 ist ebenfalls in etwa hülsenförmig ausgebildet, und ragt mit einem Abschnitt 24 in den Bereich 19 des ersten Ventilgehäuseteils 16 hinein. Der Abschnitt 24 weist dabei einen ersten Bereich 26 auf, dessen Außendurchmesser geringer ist als der Innendurchmesser des Bereichs 19 des ersten Ventilgehäuseteils 16, so dass zwischen den beiden Bereichen 19 und 26 ein Ringraum 28 ausgebildet ist, der Teil eines Strömungswegs 30 für das Strömungsmedium, insbesondere für die im Kopfraum 108 befindliche Luft, ist. Die eine, dem Bereich 18 des ersten Ventilgehäuseteils 16 zugewandte Stirnseite 29 ist axial beabstandet zum Wandabschnitt 21 des ersten Ventilgehäuseteils 16 angeordnet.

Auf der dem Schraubenhals 12 des ersten Ventilgehäuseteils 16 abgewandten Seite des zweiten Ventilgehäuseteils 17 weist dieses eine aus mehreren Bohrungsabschnitten unterschiedlichen Durchmessers bestehende Sacklochbohrung 32 auf. Von der Sacklochbohrung 32 gehen bevorzugt mehrere, in gleichmäßigen Winkelabständen zueinander angeordnete Verbindungskanälen in Form von Querbohrungen 33 aus, von denen in den Figuren lediglich eine Querbohrung 33 erkennbar ist. Die Querbohrung 33 mündet auf der der Sacklochbohrung 32 abgewandten Seite in den Ringraum 28 und ist ebenfalls Teil des Strömungswegs 30. Die Sacklochbohrung 32 ist insbesondere über eine Gewindeverbindung mit einer Druckluftquelle, vorzugsweise einem Druckluftkompressor, verbunden, über die der Kopfraum 108 des Federbeins 100 bei geöffnetem Restdruckventil 10 mit Druckluft beaufschlagt wird.

Neben dem ersten Bereich 26 weist das zweite Ventilgehäuseteil 17 im Abschnitt 24 einen zweiten Bereich 34 auf, dessen Außendurchmesser gegenüber dem ersten Bereich 26 vergrößert ist. Insbesondere entspricht der Außendurchmesser des zweiten Bereichs 34 im Wesentlichen dem Innendurchmesser des Bereichs 19 des ersten Ventilgehäuseteils 16, so dass beim axialen Zusammenfügen der beiden Ventilgehäuseteile 16, 17 sich das zweite Ventilgehäuseteil 17 über den zweiten Bereich 34 zum ersten Ventilgehäuseteil 16 zentriert. Das zweite Ventilgehäuseteil 17 weist ferner einen flanschartig umlaufenden Bund 35 auf, der als Axialanschlag beim Zusammenfügen der beiden Ventilgehäuseteile 16, 17 wirkt, sobald der Bund 35 an der dem Schraubenhals 12 gegenüberliegenden Stirnfläche 36 des ersten Ventilgehäuseteils 16 anliegt.

Um die beiden Ventilgehäuseteile 16, 17 unverlierbar miteinander zu verbinden und gleichzeitig abzudichten, ist im Übergangsbereich zwischen dem Bund 35 und der Stirnfläche 36 eine Schweißverbindung mit einer radial umlaufenden Schweißnaht 38 ausgebildet, die bevorzugt mittels einer Laserstrahleinrichtung ausgebildet wird.

Auf der der Sacklochbohrung 32 gegenüberliegenden Seite weist das zweite Ventilgehäuseteil 17 eine Aufnahme 40 zur gleitenden Führung eines kolbenartig ausgebildeten Dichtelements 41 auf. Hierbei weist das Dichtelement 41, das entlang der Längsachse 20 des Restdruckventiles 10 bewegbar angeordnet ist, innerhalb der Aufnahme 40 eine an ihrem Außenumfang ausgebildete Ringnut 42 auf, in der ein O-Ring 43 angeordnet ist, der an der Innenwand der Aufnahme 40 anliegt. Innerhalb der Aufnahme 40 ist weiterhin eine Druckfeder 45 angeordnet, die als Kraftspeicher wirkt, wobei über die Geometrie der Druckfeder 45 (Länge, Durchmesser, Federhärte usw.) der gewünschte Restdruck des Restdruckventils 10 eingestellt wird. Die Druckfeder 45 stützt sich zwischen dem Grund 46 der Aufnahme 40 und dem Boden 47 des topfförmigen Dichtelements 41 ab, wobei ein dornartiger Fortsatz 48 des zweiten Ventilgehäuseteils 17 als Führung für die Druckfeder 45 dient.

Wie insbesondere anhand der Fig. 2 erkennbar ist, geht vom Grund 46 der Aufnahme 40 in einem radial äußeren Bereich wenigstens eine in Längsrichtung verlaufende, im Ausführungsbeispiel trichterförmige Entlüftungsbohrung 49 aus, in deren in Verbindung mit der Umgebung befindlichem Strömungsweg noch ein O-Ring 50 als Schutzelement gegen das Eindringen von Schmutz, Feuchtigkeit o.Ä. in die Aufnahme 40 angeordnet ist, der in einem Einstich 51 des zweiten Ventilgehäuseteils 17 aufgenommen ist.

Der Kolbenboden 53 des Dichtelements 41 weist auf der dem Schraubenhals 12 zugewandten Seite bei dem in den Fig. 2 und 3 dargestellten Ausführungsbeispiel eine runde bzw. plattenförmige Dichtung 55 auf, die elastisch ausgebildet ist bzw. aus einem elastischen Material besteht. Bei der in den Fig. 2 und 3 dargestellten Stellung des Dichtelements 41 ist das Dichtelement 41 in einer Stellung dargestellt, bei der dieses den Strömungsweg 30 versperrt. Hierbei wirkt die Dichtung 55 mit einer an dem Wandabschnitt 21 auf der der Dichtung 55 zugewandten Seite ausgebildeten, radial umlaufenden Dichtkante 56 zusammen. Dadurch wird in dem Kopfraum 108 des Federbeins 100 der gewünschte (minimale) Restdruck aufrecht erhalten.

Befindet sich das Restdruckventil 10 bzw. dessen Dichtelement 41 hingegen in einer Stellung, bei der der Strömungsweg 30 freigegeben ist, ist die Dichtung 55 von der Dichtkante 56 axial beabstandet angeordnet. Dadurch kann die im Kopfraum 108 befindliche Druckluft über die im Bereich des Schraubenhalses 12 im ersten Ventilgehäuseteil 16 ausgebildete Bohrung 58 und den Raum zwischen dem Wandabschnitt 21 und der Dichtung 55 in den Ringraum 28, und von dort über die Querbohrungen 33 in die Sacklochbohrung 32 und die Umgebung gelangen. Weiterhin kann bei geöffnetem Restdruckventil 10 über die (nicht dargestellte) Druckluftquelle der Kopfraum 108 des Federbeins 100 mit Druckluft befüllt werden. Hierzu wird das Dichtelement 41 bzw. die Dichtung 55 entgegen der Federkraft der Druckfeder 45 durch die einströmende Druckluft von ihrem Dichtsitz abgehoben. Das Restdruckventil 10 ist somit über den Strömungsweg 30 in zwei Richtungen durchströmbar, und bildet lediglich beim Unterschreiten des über die Druckfeder 45 eingestellten Restdrucks eine Sperre aus.

In der Fig. 4 ist eine abgewandelte Ausführungsform der Erfindung mit einem Restdruckventil 10a dargestellt. Das Restdruckventil 10a unterscheidet sich von dem Restdruckventil 10 im Bereich seines Dichtelements 41a. Hierbei weist das Dichtelement 41a einen gestuft ausgebildeten Kolbenboden 53a auf, bei dem in einer radial umlaufenden Aufnahme 59 ein O-Ring 60 angeordnet ist, der in der Sperrstellung des Restdruckventils 10a an dem Wandabschnitt 21a des ersten Ventilgehäuseteils 16a dichtend anliegt. Gegebenenfalls kann es dabei vorgesehen sein, dass die eine Stirnseite 61 des Kolbenbodens 53a sich ebenfalls im Anlagekontakt mit dem Wandabschnitt 21a befindet. Wesentlich ist auch, dass der Wandabschnitt 21a, im Gegensatz zum Wandabschnitt 21, keine Dichtkante 56 wie beim Restdruckventil 10 aufweist.

In der Fig. 5 ist ein nochmals abgewandeltes Restdruckventil 10b dargestellt, das sich von dem Restdruckventil 10a dadurch unterscheidet, dass die beiden Ventilgehäuseteile 16b, 17b mittels einer Schraubverbindung 65 miteinander verbunden sind. Hierbei weist das zweite Ventilgehäuseteil 17b einen flanschförmig umlaufenden, als Axialanschlag wirkenden Bund 66 auf, der auf der dem ersten Ventilgehäuseteil 16b zugewandten Seite in einer ringförmigen Aufnahme 67 einen O-Ring 68 trägt, der beim Verschrauben der beiden Ventilgehäuseteile 16b, 17b die Schraubverbindung 65 nach außen hin abdichtet. Selbstverständlich ist es auch möglich, auf den O-Ring 68 zu verzichten und beispielsweise durch Einbringen eines Klebstoffes oder einer Dichtmasse im Bereich der Schraubverbindung eine Abdichtung auszubilden.

Die soweit beschriebenen Restdruckventile 10, 10a und 10b können in vielfältiger Art und Weise abgewandelt bzw. modifiziert werden, ohne vom Erfindungsgedanken abzuweichen.

## Patentansprüche

1. Restdruckventil (10; 10a; 10b) für ein Strömungsmedium, insbesondere für Luft, dessen in einem Ventilgehäuse (15) angeordneter Strömungsdurchgang (30) in entgegengesetzte Richtungen durchströmbar und in Abhängigkeit von dem Druck des Strömungsmediums mittels eines wenigstens teilweise bewegbaren Dichtelements (41; 41a) unterbrechbar ausgebildet ist, wobei das Dichtelement (41; 41a) durch einen insbesondere als Druckfeder ausgebildeten Kraftspeicher (45) beim Unterschreiten eines Mindestdrucks des Strömungsmediums zur Unterbrechung des Strömungsdurchgangs (30) gegen ein Gegenelement (21; 21a) dichtend anliegt, wobei der Strömungsweg (30) zwei getrennte, koaxial zueinander angeordnete Bohrungen (32, 58) aufweist, die durch wenigstens einen Verbindungskanal (33) miteinander verbunden sind, wobei der wenigstens eine Verbindungskanal (33) in einem Ventilgehäuseteil (17; 17b) ausgebildet ist, das eine Aufnahme (40) zur zumindest mittelbaren, gleitenden Führung des Dichtelements (41; 41a) und zur Aufnahme des Kraftspeichers (45) aufweist, und wobei die Verbindung zwischen der einen Bohrung (58) und dem wenigstens einen Verbindungskanal (33) über einen Ringraum (28) erfolgt, der symmetrisch zur Längsachse (20) des Ventilgehäuses (15) zwischen dem einen Ventilgehäuseteil (17; 17b) und einem anderen, das erstgenannte Ventilgehäuseteil (17; 17b) im Bereich des Strömungswegs (30) radial umgebenden Ventilgehäuseteils (16; 16a; 16b) angeordnet ist,
**dadurch gekennzeichnet,**
**dass** das Dichtelement (41; 41a) unmittelbar in der Aufnahme (40) angeordnet ist, und dass der Kraftspeicher (45) in einem von der Aufnahme (40) und dem Dichtelement (41; 41a) gebildeten Raum angeordnet ist, der mittels wenigstens einer Entlüftungsbohrung (49) mit der Umgebung verbunden ist.

2. Restdruckventil nach Anspruch 1,
**dadurch gekennzeichnet,**
**dass** das Gegenelement durch einen radial zur Längsachse (20) des Ventilgehäuses (15) umlaufenden Wandabschnitt (21a) des einen Ventilgehäuseteils (16) gebildet ist.

3. Restdruckventil nach Anspruch 2,
**dadurch gekennzeichnet,**
**dass** das Dichtelement (41a) auf der dem Wandabschnitt (21a) zugewandten Seite in einer Ausnehmung ein Dichtelement, insbesondere in Form eines O-Rings (60) aufweist, das zum Sperren des Strömungswegs (30) an dem Wandabschnitt (21a) anliegt.

4. Restdruckventil nach Anspruch 2,
**dadurch gekennzeichnet,**
**dass** das Dichtelement (41) auf der dem Wandabschnitt (21) zugewandten Seite eine aus elastischem Material bestehende, ringförmige oder zylindrische Dichtung (55) aufweist, die mit einer Stirnseite zum Sperren des Strömungswegs (30) an einer Dichtkante (56) des Wandabschnitts (21) anliegt.

5. Restdruckventil nach einem der Ansprüche 1 bis 4,
**dadurch gekennzeichnet,**
**dass** die beiden Ventilgehäuseteile (16b, 17b) durch eine Schraubverbindung (65) miteinander verbunden sind.

6. Restdruckventil nach Anspruch 5,
**dadurch gekennzeichnet,**
**dass** wenigstens eines der Ventilgehäuseteile (16b, 17b) optional einen radial umlaufenden, bundartigen Flanschbereich (66) aufweist, der beim Verbinden der beiden Ventilgehäuseteile (16b, 17b) mittels der Schraubverbindung (65) als Axialanschlag wirkt, und dass in dem wenigstens einen optionalen Flanschbereich (66) eine ringförmige Ausnehmung (67) zur Aufnahme einer als O-Ring (68) ausgebildeten Dichtung ausgebildet ist.

7. Restdruckventil nach einem der Ansprüche 1 bis 4,
**dadurch gekennzeichnet,**
**dass** die beiden Ventilgehäuseteile (16; 16a, 17) durch eine Schweißverbindung, vorzugsweise durch eine Laserschweißverbindung miteinander verbunden sind.

8. Restdruckventil nach Anspruch 7,
**dadurch gekennzeichnet,**
**dass** eines der Ventilgehäuseteile (17) einen flanschförmig umlaufenden Bund (35) aufweist, gegen den beim Fügen der beiden Ventilgehäuseteile (16; 16a, 17) das andere Ventilgehäuseteil (16; 16a) mit einer Stirnfläche (36) anliegt.

9. Restdruckventil nach Anspruch 8,
**dadurch gekennzeichnet,**
**dass** die Schweißverbindung im Bereich des Bundes (35) ausgebildet ist.

10. Restdruckventil nach einem der Ansprüche 1 bis 9,
**dadurch gekennzeichnet,**
**dass** das Dichtelement (41; 41a) kolbenartig ausgebildet ist, und dass das Dichtelement (41; 41a) im Bereich der Aufnahme (40) im Ventilgehäuseteil (17; 17b) an einer Umfangsfläche eine Ringnut (42) aufweist, in der ein O-Ring (45) angeordnet ist, der an der Aufnahme (40) anliegt.

11. Restdruckventil nach Anspruch 1,
**dadurch gekennzeichnet,**
**dass** die wenigstens eine Entlüftungsbohrung (49) in einer ringnutförmigen Aufnahme (51) mündet, in der ein O-Ring (50) als Schutzelement angeordnet ist.

12. Restdruckventil nach einem der Ansprüche 1 bis 11,
**dadurch gekennzeichnet,**
**dass** mehrere Verbindungskanäle (33) vorgesehen sind, die in radial gleichen Winkelabständen zueinander angeordnet sind.

13. Restdruckventil nach einem der Ansprüche 1 bis 12,
**dadurch gekennzeichnet,**
**dass** die eine Bohrung (32) im Ventilgehäuseteil (17; 17b) als Sacklochbohrung ausgebildet ist, dass im Bereich des Grundes der Sacklochbohrung (32) das Ventilgehäuseteil (17; 17b) einen dornartigen Fortsatz (48) ausbildet, der der Führung des als Druckfeder (45) ausgebildeten Kraftspeichers dient.

## Claims

1. A residual pressure valve (10; 10a; 10b) for a flow medium, in particular for air, the flow passage (30) of which valve, which is arranged in a valve housing (15), is adapted to allow flows to pass in opposite directions and be interrupted depending on the pressure of the flow medium by means of an at least partially movable sealing element (41; 41a), wherein the sealing element (41; 41a) buts against a counter element (21; 21a) in a sealing manner by an energy storage (45) configured as pressure spring when going below a minimum pressure of the flow medium for interrupting the flow passage (30), wherein the flow path (30) comprises separate bores (32, 58) which are arranged coaxially to one another and connected to one another by at least one connecting channel (33), wherein the at least one connecting channel (33) is formed in a valve housing part (17; 17b) which comprises a reception (40) for the at least indirect, sliding guidance of the sealing element (41; 41a) and for the reception of the energy storage (45), and wherein the connection between one bore (58) and the at least one connecting channel (33) is effected via a ring chamber (28), which is arranged symmetrically to the longitudinal axis (20) of the valve housing (15) between one valve housing part (17; 17b) and another valve housing part (16; 16a; 16b) radially surrounding the first-mentioned valve housing part (17; 17b) in the region of the flow path (30),
**characterized in that**
the sealing element (41; 41a) is arranged directly in the reception (40), and **in that** the energy storage (45) is arranged in a chamber formed by the reception (40) and the sealing element (41; 41a) which is connected to the environment by means of at least one vent bore (49).

2. The residual pressure valve according to claim 1,
**characterized in that**
the counter element is formed by a wall section (21a) running circumferentially radially to the longitudinal axis (20) of the valve housing (15) of the one valve housing part (16).

3. The residual pressure valve according to claim 2,
**characterized in that**
the sealing element (41a) comprises, in a recess, on the side facing the wall section (21a), a sealing element, in particular in the form of an O-ring (60), which buts against the wall section (21a) for locking the flow path (30).

4. The residual pressure valve according to claim 2,
**characterized in that**
the sealing element (41) comprises, on the side facing the wall section (21), an annular or cylindrical seal (55) consisting of an elastic material, which buts against a sealing edge (56) of the wall section (21) with a front face for locking the flow path (30).

5. The residual pressure valve according to one of claims 1 to 4,
**characterized in that**
the two valve housing parts (16b, 17b) are connected to one another by a screw connection (65).

6. The residual pressure valve according to claim 5,
**characterized in that**
at least one of the valve housing parts (16b, 17b) optionally comprises a radially circumferential, collar-like flange region (66) which functions as a axial stop when connecting the two valve housing parts (16b, 17b) by means of the screw connection (65), and **in that** an annular recess (67) is formed in the at least one optional flange region (66) for the reception of a seal that is configured as an O-ring (68).

7. The residual pressure valve according to one of claims 1 to 4,
**characterized in that**
the two valve housing parts (16; 16a, 17) are connected to one another by a weld connection, preferably by a laser weld connection.

8. The residual pressure valve according to claim 7,
**characterized in that**
one of the valve housing parts (17) comprises a flange-shaped circumferential collar (35), with the other valve housing part (16; 16a) butting against said collar with a front face (36) when joining the two valve housing parts (16; 16a, 17).

9. The residual pressure valve according to claim 8,
**characterized in that**
the weld connection is formed in the region of the collar (35).

10. The residual pressure valve according to one of claims 1 to 9,
**characterized in that**
the sealing element (41; 41a) is configured piston-like, and **in that** the sealing element (41; 41a), in the region of the reception (40) in the valve housing part (17; 17b), on a circumferential surface comprises an annular groove (42) in which an O-ring (45) is arranged, butting against the reception (40).

11. The residual pressure valve according to claim 1,
**characterized in that**
the at least one vent bore (49) ends in an annular-groove-shaped reception (51), in which an O-ring (50) is arranged as a protective element.

12. The residual pressure valve according to one of claims 1 to 11,
**characterized in that**
multiple connecting channels (33) are provided, which are arranged at radially identical angle distances to one another.

13. The residual pressure valve according to one of claims 1 to 12,
**characterized in that**
the one bore (32) in the valve housing part (17; 17b) is formed as blind hole, **in that** the valve housing part (17; 17b) forms, in the region of the bottom of the blind hole (32), a thorn-like extension (48) which serves for the guidance of the energy storage, which is configured as a pressure spring (45).

## Revendications

1. Soupape de pression résiduelle (10; 10a; 10b) pour un fluide en écoulement, en particulier l'air, dont le passage d'écoulement (30) disposé dans un corps de soupape (15) peut être traversé dans deux directions opposées et peut être interrompu en fonction de la pression du fluide en écoulement au moyen d'un élément d'étanchéité au moins partiellement déplaçable (41; 41a), dans laquelle l'élément d'étanchéité (41; 41a) s'applique de façon étanche contre un contre-élément (21; 21a) au moyen d'un accumulateur de force (45) réalisé en particulier sous la forme d'un ressort de pression lors d'une baisse en dessous d'une pression minimale du fluide en écoulement en vue de l'interruption du passage d'écoulement (30), dans laquelle le chemin d'écoulement (30) présente deux alésages séparés (32, 58) disposés coaxialement l'un à l'autre, qui sont reliés l'un à l'autre par au moins un canal de liaison (33), dans laquelle ledit au moins un canal de liaison (33) est formé dans une partie de corps de soupape (17; 17b), qui présente un logement (40) pour le guidage glissant, au moins indirect, de l'élément d'étanchéité (41; 41a) et pour le logement de l'accumulateur de force (45), et dans laquelle la liaison entre un premier alésage (58) et ledit au moins un canal de liaison (33) est effectuée au moyen d'une chambre annulaire (28), qui est disposée de façon symétrique par rapport à l'axe longitudinal (20) du corps de soupape (15) entre une partie de corps de soupape (17; 17b) et une autre partie de corps de soupape (16; 16a; 16b) entourant radialement la première partie de corps de soupape mentionnée (17; 17b) dans la région du chemin d'écoulement (30), **caractérisée en ce que** l'élément d'étanchéité (41; 41a) est disposé directement dans le logement (40), et **en ce que** l'accumulateur de force (45) est disposé dans une chambre formée par le logement (40) et l'élément d'étanchéité (41; 41a), qui est reliée à l'environnement au moyen d'au moins un alésage d'aération (49).

2. Soupape de pression résiduelle selon la revendication 1, **caractérisée en ce que** le contre-élément est formé par une partie de paroi (21a) de la première partie de corps de soupape (16) radialement périphérique par rapport à l'axe longitudinal (20) du corps de soupape (15).

3. Soupape de pression résiduelle selon la revendication 2, **caractérisée en ce que** l'élément d'étanchéité (41a) présente sur le côté tourné vers la partie de paroi (21a), dans un évidement, un élément d'étanchéité, en particulier en forme de joint torique (60), qui s'applique sur la partie de paroi (21a) pour fermer le chemin d'écoulement (30).

4. Soupape de pression résiduelle selon la revendication 2, **caractérisée en ce que** l'élément d'étanchéité (41) présente sur le côté tourné vers la partie de paroi (21) un joint annuaire ou cylindrique (55), composé d'un matériau élastomère, qui s'applique avec un côté frontal sur une arête d'étanchéité (56) de la partie de paroi (21) pour fermer le chemin d'écoulement (30).

5. Soupape de pression résiduelle selon l'une quelconque des revendications 1 à 4, **caractérisée en ce que** les deux parties de corps de soupape (16b, 17b) sont assemblées l'une à l'autre par un assemblage vissé (65).

6. Soupape de pression résiduelle selon la revendication 5, **caractérisée en ce qu'**au moins une des parties de corps de soupape (16b, 17b) présente en option une région de bride périphérique en forme d'épaulement (66), qui lors de l'assemblage des deux parties de corps de soupape (16b, 17b) au moyen de l'assemblage vissé (65) fait office de butée axiale, et **en ce qu'**un évidement annulaire (67) est formé dans ladite au moins une région de bride optionnelle (66) pour loger un joint constitué par un joint torique (68).

7. Soupape de pression résiduelle selon l'une quelconque des revendications 1 à 4, **caractérisée en ce que** les deux parties de corps de soupape (16; 16a, 17) sont assemblées l'une à l'autre par une liaison par soudure, de préférence une liaison par soudure laser.

8. Soupape de pression résiduelle selon la revendication 7, **caractérisée en ce qu'**une des parties de corps de soupape (17) présente un rebord (35) périphérique en forme de bride, contre lequel l'autre partie de corps de soupape (16; 16a) s'applique par une face frontale lors de l'assemblage des deux parties de corps de soupape (16; 16a, 17).

9. Soupape de pression résiduelle selon la revendication 8, **caractérisée en ce que** l'assemblage soudé est formé dans la région du rebord (35).

10. Soupape de pression résiduelle selon l'une quelconque des revendications 1 à 9, **caractérisée en ce que** l'élément d'étanchéité (41; 41a) est réalisé en forme de piston, et **en ce que** l'élément d'étanchéité (41; 41a) présente dans la région du logement (40) dans la partie de corps de soupape (17; 17b) sur une face périphérique une rainure annulaire (42), dans laquelle est disposé un joint torique (45), qui s'appuie sur le logement (40).

11. Soupape de pression résiduelle selon la revendication 1, **caractérisée en ce que** ledit au moins un alésage d'aération (49) débouche dans un logement en forme de rainure annulaire (51), dans lequel un joint torique (50) est disposé en tant qu'élément de protection.

12. Soupape de pression résiduelle selon l'une quelconque des revendications 1 à 11, **caractérisée en ce qu'**il est prévu plusieurs canaux de liaison (33), qui sont disposés à des distances angulaires radialement égales l'un de l'autre.

13. Soupape de pression résiduelle selon l'une quelconque des revendications 1 à 12, **caractérisée en ce que** le premier alésage (32) dans la partie de corps de soupape (17; 17b) est réalisé en forme de trou borgne, **en ce que** la partie de corps de soupape (17; 17b) forme dans la région du fond du trou borgne (32) un prolongement en forme de mandrin (48), qui sert pour le guidage de l'accumulateur de force constitué par un ressort de pression (45).
